# EUROPÄISCHE PATENTSCHRIFT

(11) **EP 3 551 520 B1**
(45) Veröffentlichungstag und Bekanntmachung des Hinweises auf die Patenterteilung: **02.06.2021**
(21) Anmeldenummer: 17798211.3
(22) Anmeldetag: 16.11.2017
(51) Int. Cl.: B62D 1/04, B62D 1/06

(54) **LENKRADSKELETTABDECKUNG, VERFAHREN ZU DEREN HERSTELLUNG SOWIE LENKRAD MIT EINER SOLCHEN LENKRADSKELETTABDECKUNG**
STEERING WHEEL SKELETON COVER, METHOD FOR PRODUCING SAME, AND STEERING WHEEL HAVING SUCH A STEERING WHEEL SKELETON COVER
CACHE DE SQUELETTE DE VOLANT, PROCÉDÉ POUR SA FABRICATION AINSI QUE VOLANT COMPRENANT LEDIT CACHE DE SQUELETTE DE VOLANT

(30) Priorität: 07.12.2016 DE 102016123702
(43) Veröffentlichungstag der Anmeldung: 16.10.2019
(73) Patentinhaber: Dalphi Metal España, S.A., 36213 Vigo (ES)
(72) Erfinder: BAÑA CASTRO, Ramon, 36208 Vigo (ES); OLLERO OLLERO, Jorge, 36210 Vigo (ES); MOURE FERNÁNDEZ, Marcelino, 36350 Nigrán (ES); PEREIRO COTO, Pedro, 36400 O Porrino (ES); CONDE BOUZA, Fabián, 36340 Nigrán (ES)
(74) Vertreter: ZF Patentabteilung - DIPS
(86) Internationale Anmeldenummer: PCT/EP2017/079372
(87) Internationale Veröffentlichungsnummer: WO 2018/104014

(56) Entgegenhaltungen:
- EP-A1- 2 415 652
- EP-A2- 2 185 398
- WO-A1-2009/009029
- DE-A1-102009 044 662
- JP-A- 2001 114 112

## Beschreibung

Die Erfindung betrifft eine Lenkradskelettabdeckung, ein Verfahren zu deren Herstellung sowie ein Fahrzeuglenkrad mit einer solchen Lenkradskelettabdeckung.

Aus dem Stand der Technik sind bereits zahlreiche Fahrzeuglenkräder mit einer Nabe und einem Lenkradkranz bekannt, wobei der Lenkradkranz über wenigstens eine Speiche mit der Nabe verbunden ist. Als tragenden Kern umfassen derartige Lenkräder gewöhnlich ein Metallskelett, auf das zumindest abschnittsweise eine Umschäumung aufgebracht ist. Diese Umschäumung bildet dann entweder eine sichtbare Lenkradoberfläche oder wird als Träger für eine optionale Heizmatte sowie für Verkleidungselemente zum Beispiel aus Holz oder Leder genutzt.

Die DE 10 2009 044 662 A1 zeigt ein Fahrzeuglenkrad mit einem Lenkradskelett und mehreren Sensorelementen, welche im Bereich des Lenkradkranzes durch Clips am Lenkradskelett befestigt sind. Die Sensorelemente liegen an einer Außenfläche des Lenkrads nach außen frei, während das Lenkradskelett nach außen durch einen Lenkradkörper abgedeckt ist.

Eine Lenkradbaugruppe mit einem Grundkörper, der von einer Grundkörperumhüllung umgeben, insbesondere umschäumt ist, wird in der EP 2 185 398 B1 beschrieben. Dabei weist die Lenkradbaugruppe eine Anzeigeeinrichtung auf, welche am Grundkörper befestigt und über eine Leitung elektrisch angeschlossen ist, wobei sich die Leitung durch die Grundkörperumhüllung erstreckt.

In der WO 2009/009029 A1 ist eine gattungsgemäße Lenkradskelettabdeckung zur Montage an einem Lenkradskelett eines Fahrzeuglenkrads offenbart. Das Lenkradskelett weist in diesem Fall einen Kranzabschnitt auf, welcher von zwei in Kranzlängsrichtung geschlossen umlaufenden, vorgefertigten und formstabilen Halbschalen umhüllt ist, wobei die Halbschalen am Kranzabschnitt des Lenkradskeletts befestigt sind.

Schließlich umfasst das Lenkrad gemäß der JP 2001 114112 A ein Lenkradskelett, welches im Bereich des Lenkradkranzes ein U-förmiges Profil aufweist, wobei zwischen den gegenüberliegenden Schenkeln des U-Profils Leuchtkörper angeordnet sind. Das Lenkradskelett ist im Kranzbereich von einer Kunstharzschicht umgeben, welche angrenzend an die freien Enden der gegenüberliegenden Schenkel des U-Profils transparent ausgeführt ist.

Aufgabe der Erfindung ist es, ein möglichst leichtes Fahrzeuglenkrad zu schaffen, bei dem insbesondere der Materialbedarf für die Umschäumung des Lenkradskeletts minimiert ist.

Erfindungsgemäß wird diese Aufgabe gelöst durch Lenkradskelettabdeckung zur Montage an einem Lenkradskelett eines Fahrzeuglenkrads, mit einem Abdeckabschnitt zum Schließen eines im Querschnitt offenen Profils des Lenkradskeletts, sowie wenigstens einem Befestigungselement zum Fixieren der Lenkradskelettabdeckung am Lenkradskelett. Die Lenkradskelettabdeckung schließt somit das offene Profil des Lenkradskeletts, sodass insgesamt ein geschlossenes Hohlprofil entsteht. In den zwischen dem Lenkradskelett und der Lenkradskelettabdeckung ausgebildeten Hohlraum dringt beim Umschäumen kein Material ein, sodass bei identischen äußeren Abmessungen des Fahrzeuglenkrads weniger Schäummaterial benötigt wird und damit das Lenkradgewicht insgesamt sinkt. Die Lenkradskelettabdeckung ist bevorzugt ein Kunststoffbauteil, das bei geringem Gewicht einfach und preiswert herstellbar ist.

Erfindungsgemäß weist der Abdeckabschnitt der Lenkradskelettabdeckung skelettseitig Vorsprünge zur Führung und/oder Befestigung einer elektrischen Leitung auf, wobei die Vorsprünge besonders bevorzugt einstückig an die Lenkradskelettabdeckung angeformt sind. Die elektrische Leitung ist damit in einem Hohlraum zwischen dem Lenkradskelett und der Lenkradskelettabdeckung geschützt untergebracht. Dies ist im Übrigen auch fertigungstechnisch vorteilhaft, da während oder nach der Umschäumung keinerlei Leitungskanäle im Schäummaterial vorgesehen werden müssen.

Alternativ oder zusätzlich zu den skelettseitigen Vorsprüngen ist erfindungsgemäß an der Lenkradskelettabdeckung ein einstückig angeformter Steckverbinder zur elektrischen Verbindung mit einer elektrischen Bedieneinheit des Fahrzeuglenkrads vorgesehen. Die elektrische Bedieneinheit lässt sich durch die direkte Integration des Steckverbinders in die Lenkradskelettabdeckung sowie einen komplementär ausgeführten Steckverbinder in der Bedieneinheit mit geringem Fertigungs- und Montageaufwand an eine elektrische Leitung anschließen, die an der Lenkradskelettabdeckung befestigt oder geführt ist.

Die Vorsprünge sind dabei bevorzugt als elastische Clips zum Einclipsen der elektrischen Leitung ausgeführt. Auf diese Weise lässt sich die elektrische Leitung einfach und schnell an der Lenkradskelettabdeckung fixieren.

Gemäß einer weiteren Ausführungsform der Lenkradskelettabdeckung weist der Abdeckabschnitt auf einer vom Lenkradskelett abgewandten Seite eine strukturierte Oberfläche auf, die insbesondere abstehende Rippen umfasst. Diese Rippen erstrecken sich vorzugsweise in Längsrichtung eines Lenkradkranzes und sorgen damit für eine besonders zuverlässige und feste Verbindung zwischen der Umschäumung und der Lenkradskelettabdeckung bzw. dem Lenkradskelett. Bei entsprechender Beanspruchung durch den Fahrer wird durch die strukturierte Oberfläche vor allem ein unerwünschtes Verdrehen der Umschäumung um die (gekrümmte) Längsachse des Lenkradkranzes relativ zur Lenkradskelettabdeckung bzw. zum Lenkradskelett zuverlässig verhindert.

Der Abdeckabschnitt der Lenkradskelettabdeckung weist bevorzugt einen Montagevorsprung zum Aufstecken einer elektrischen Bedieneinheit des Fahrzeuglenkrads auf. Der Montagevorsprung umfasst insbesondere seitliche Führungsfortsätze zur einfachen Montage und exakten Positionierung der Bedieneinheit.

Vorzugsweise umfasst das wenigstens eine Befestigungselement der Lenkradskelettabdeckung ein Rastelement zum Verrasten mit dem Lenkradskelett und/ oder einen Reibschlussabschnitt zur reibschlüssigen Verbindung mit dem Lenkradskelett und/oder eine Befestigungsöffnung zum Verschrauben oder Vernieten mit dem Lenkradskelett.

Gemäß einer weiteren Ausführungsform weist die Lenkradskelettabdeckung zumindest abschnittsweise einen L-förmigen Querschnitt auf, wobei zwischen den Schenkeln des L-Querschnitts Versteifungsrippen zur Stabilisierung der Lenkradskelettabdeckung vorgesehen sein können.

Die Aufgabe wird im Übrigen auch gelöst durch ein Lenkrad für ein Fahrzeug, mit einer Lenkradachse, einer Nabe zur Befestigung des Lenkrads an einer um die Lenkradachse drehbaren Lenkwelle, und einem Lenkradkranz, der mit der Nabe verbunden ist und die Nabe in Umfangsrichtung zumindest teilweise umgibt, einem Lenkradskelett, das bevorzugt wenigstens abschnittsweise ein offenes Querschnittsprofil aufweist, und einer oben beschriebenen Skelettabdeckung, wobei das Lenkradskelett zusammen mit der Skelettabdeckung zumindest abschnittsweise ein im Querschnitt geschlossenes Hohlprofil ausbildet. Das geschlossene Hohlprofil wird beim Umschäumen nicht mit Schäummaterial gefüllt, sodass im Inneren des Fahrzeuglenkrads Hohlräume verbleiben, die zu einem verminderten Bedarf an Schäummaterial und folglich zu einem geringeren Lenkradgewicht führen.

In einer Ausführungsform des Lenkrads ist die Skelettabdeckung in axialer Draufsicht C-förmig ausgebildet und deckt das Lenkradskelett im Bereich des Lenkradkranzes ab. Insbesondere erstreckt sich die Skelettabdeckung über wenigstens 180°, insbesondere wenigstens 270°.

Ferner kann eine Umschäumung vorgesehen sein, die zumindest abschnittsweise das Lenkradskelett und die Lenkradskelettabdeckung umgibt, insbesondere im Querschnitt gesehen umschließt.

Schließlich betrifft die Erfindung auch ein Verfahren zum Herstellen eines Fahrzeuglenkrads mit folgenden Schritten:
- Bereitstellen eines Lenkradskeletts und einer oben beschriebenen Lenkradskelettabdeckung;
- Befestigen einer elektrischen Leitung an der Lenkradskelettabdeckung;
- Befestigen der Lenkradskelettabdeckung am Lenkradskelett, sodass sich die elektrische Leitung zumindest bereichsweise zwischen der Lenkradskelettabdeckung und dem Lenkradskelett befindet und eine vormontierte Skelettbaugruppe entsteht;
- Umschäumen der vormontierten Skelettbaugruppe.

Gemäß einer Verfahrensvariante wird nach dem Umschäumen eine elektrische Bedieneinheit bereitgestellt und auf einen Montagevorsprung der Lenkradskelettabdeckung und/oder des Lenkradskeletts aufgesteckt. Vorzugsweise wird die Bedieneinheit beim Aufstecken elektrisch angeschlossen und am Montagevorsprung befestigt, insbesondere verrastet.

Ferner kann nach dem Umschäumen zumindest abschnittsweise eine Verkleidung, insbesondere eine Leder- oder Holzverkleidung auf die Umschäumung aufgebracht werden.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine Draufsicht einer erfindungsgemäßen Lenkradskelettabdeckung;
- Figur 2 eine Rückansicht eines erfindungsgemäßen Lenkrads mit einem Lenkradskelett und einer montierten Lenkradskelettabdeckung gemäß Figur 1;
- Figur 3 einen Detailausschnitt A der Figur 2 im Bereich eines Befestigungselements;
- Figur 4 einen Detailausschnitt B der Figur 2 im Bereich eines weiteren Befestigungselements;
- Figur 5 einen Detailausschnitt C der Figur 2 im Bereich eines weiteren Befestigungselements;
- Figur 6 einen weiteren Detailausschnitt der Figur 2;
- Figur 7 eine Vorderansicht des erfindungsgemäßen Lenkrads gemäß Figur 2;
- Figur 8 eine Rückansicht des erfindungsgemäßen Lenkrads gemäß Figur 2 nach einer Umschäumung;
- Figur 9 einen Schnitt IX-IX durch das Lenkrad gemäß Figur 8; und
- Figur 10 eine Explosionsansicht eines erfindungsgemäßen Lenkrads.

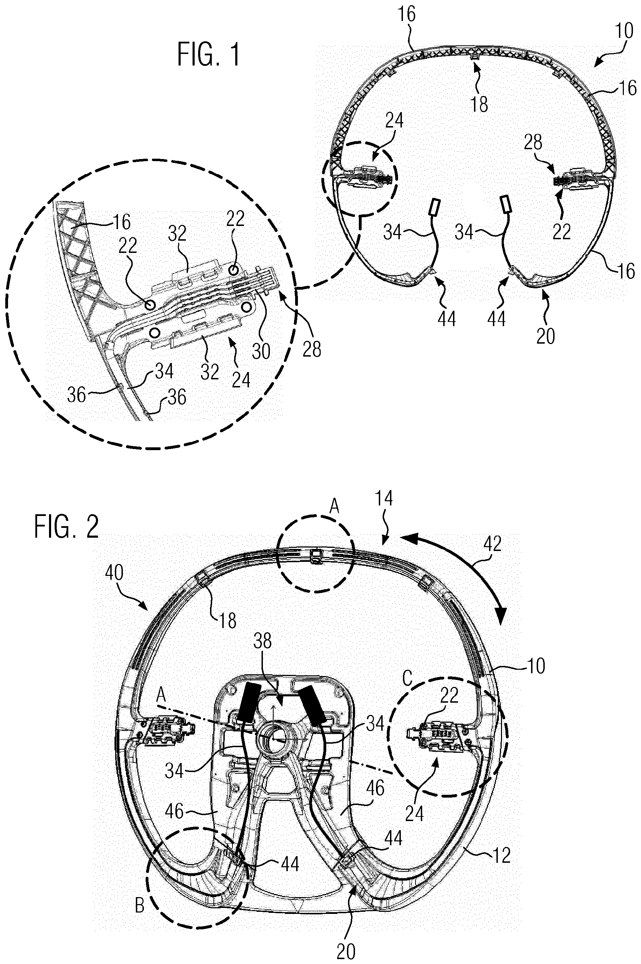

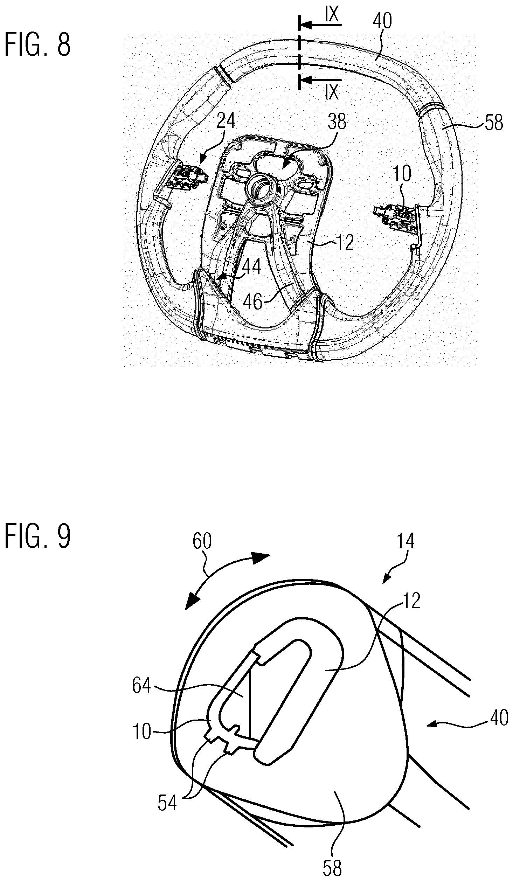

Die Figur 1 zeigt eine Lenkradskelettabdeckung 10 zur Montage an einem Lenkradskelett 12 eines Fahrzeuglenkrads 14 (siehe auch Figur 2), mit einem Abdeckabschnitt 16 zum Schließen eines im Querschnitt offenen Profils des Lenkradskeletts 12 (siehe auch Figur 9) sowie wenigstens einem Befestigungselement 18, 20, 22 zum Fixieren der Lenkradskelettabdeckung 10 am Lenkradskelett 12.

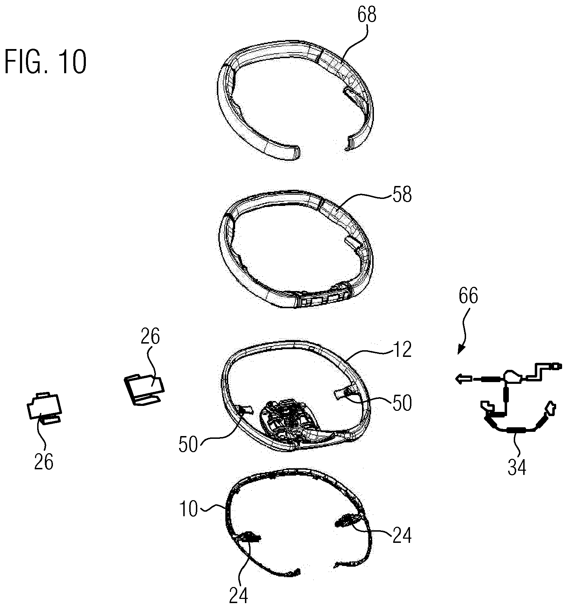

Die Lenkradskelettabdeckung 10 ist gemäß Figur 1 ein im Wesentlichen C-förmig ausgeführtes Kunststoffteil, wobei im dargestellten Ausführungsbeispiel mit Bezug auf die C-Form in einem oberen und einem unteren Bereich jeweils ein nach innen abstehender Montagevorsprung 24 zum Aufstecken einer elektrischen Bedieneinheit 26 (siehe Figur 10) an den Abdeckabschnitt 16 der Lenkradskelettabdeckung 10 angeformt ist. Die Montagevorsprünge 24 erstrecken sich dabei jeweils vom Abdeckabschnitt 16 zu einem freien Ende 28.

Im Detailausschnitt der Figur 1 wird außerdem deutlich, dass die Lenkradskelettabdeckung 10 am freien Ende 28 des Montagevorsprungs 24 einen einstückig angeformten Steckverbinder 30 zur elektrischen Verbindung mit der zugeordneten elektrischen Bedieneinheit 26 aufweist. Ferner sind an den seitlichen Rändern des Montagevorsprungs 24 Führungen 32, insbesondere parallel zueinander ausgerichtete Führungsschienen vorgesehen, die mit entsprechenden Führungselementen an der Bedieneinheit 26 zusammenwirken und für eine rasche Montage sowie eine exakte Ausrichtung und Positionierung der Bedieneinheit 26 sorgen.

Ausgehend vom Steckverbinder 30 erstreckt sich eine elektrische Leitung 34 über den Montagevorsprung 24 zum Abdeckabschnitt 16 der Lenkradskelettabdeckung 10. Wie im Detailausschnitt der Figur 1 angedeutet, weist der Abdeckabschnitt 16 skelettseitig Vorsprünge 36 zur Führung und/oder Befestigung der elektrischen Leitung 34 auf, wobei sich diese Vorsprünge 36 etwa senkrecht zu einer Ebene erstrecken, die von der weitgehend C-förmigen Lenkradskelettabdeckung 10 aufgespannt wird.

Die Vorsprünge 36 sind im dargestellten Ausführungsbeispiel einstückig an den Abdeckabschnitt 16 angeformt und als Clips, insbesondere elastische Clips zum Einclipsen der elektrischen Leitung 34 ausgeführt.

Die Figur 2 zeigt eine Rückansicht eines Lenkrads 14 für ein Fahrzeug, mit einer Lenkradachse A, einer Nabe 38 zur Befestigung des Lenkrads 14 an einer um die Lenkradachse A drehbaren Lenkwelle, einem Lenkradkranz 40, der mit der Nabe 38 verbunden ist und die Nabe 38 in Umfangsrichtung 42 zumindest teilweise umgibt. Ferner umfasst das Lenkrad 14 das Lenkradskelett 12, welches zumindest abschnittsweise ein offenes Querschnittsprofil aufweist sowie zumindest teilweise die Nabe 38 und den Lenkradkranz 40 bildet, sowie die oben beschriebene Lenkradskelettabdeckung 10, wobei das Lenkradskelett 12 zusammen mit der Lenkradskelettabdeckung 10 zumindest abschnittsweise ein im Querschnitt geschlossenes Hohlprofil ausbildet.

Wie bereits erwähnt, ist die Lenkradskelettabdeckung 10 in axialer Draufsicht (mit Ausnahme der optionalen, abstehenden Montagevorsprünge 24) etwa C-förmig ausgebildet und deckt das Lenkradskelett 12 im Bereich des Lenkradkranzes 40 ab. Die Lenkradskelettabdeckung 10 erstreckt sich dabei zwischen ihren freien Enden 44 über wenigstens 180°, insbesondere wenigstens 270° um die Lenkradachse A, wobei die freien Enden 44 vorzugsweise im Bereich von Lenkradspeichen oder Verbindungselementen 46 angeordnet sind, welche den Lenkradkranz 40 mit der Nabe 38 verbinden. Die elektrische Leitung 34 lässt sich dann beispielsweise über diese Verbindungselemente 46 mit einer Wickelfeder im Bereich der Nabe 38 verbinden und auf diese Weise mit einer Stromversorgung und/oder elektrischen Steuereinheit des Fahrzeugs koppeln.

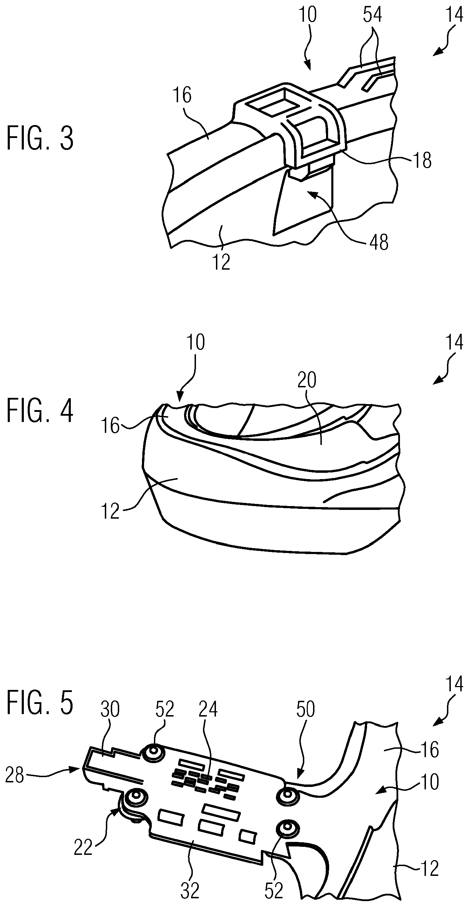

In den Figuren 3 bis 6 sind Detailausschnitte der Figur 2 im Bereich von Befestigungselementen 18, 20, 22 der Lenkradskelettabdeckung 10 dargestellt.

So zeigt die Figur 3 ein Befestigungselement 18, das als Rastelement zur Verrastung mit dem Lenkradskelett 12 ausgeführt ist. Das Rastelement ist hierbei ein elastischer Rasthaken, der in eine Rastausnehmung 48 des Lenkradskeletts 12 eingreift und die Lenkradskelettabdeckung 10 am Lenkradskelett 12 befestigt. In axialer Draufsicht sind die als Rastelemente ausgebildeten Befestigungselemente 18 in einer Grundstellung des Fahrzeuglenkrads 14 für Geradeausfahrt in einem oberen Bereich, das heißt zwischen einer 9-Uhr-Position und einer 3-Uhr-Position, vorzugsweise zwischen einer 10-Uhr-Position und einer 2-Uhr-Position vorgesehen.

Die Figur 4 zeigt ein Befestigungselement 20, das als Reibschlussabschnitt zur reibschlüssigen Verbindung mit dem Lenkradskelett 12 ausgeführt ist. Solche Reibschlussabschnitte sind insbesondere im Bereich der freien Enden 44 der Lenkradskelettabdeckung 10 vorgesehen und bilden eine Presspassung mit dem Lenkradskelett 12 aus, sodass insgesamt ein geschlossener Hohlquerschnitt entsteht. In einigen Ausführungsvarianten können die freien Enden 44 der Lenkradskelettabdeckung 10 als Reibschlussstopfen ausgeführt sein, die beim Umschäumen des Lenkradskeletts 12 und der Lenkradskelettabdeckung 10 das Eindringen von Schäummaterial in den geschlossenen Hohlquerschnitt verhindern.

Die Figur 5 zeigt ein Befestigungselement 22, das als Befestigungsöffnung zum Verschrauben oder Vernieten mit dem Lenkradskelett 12 ausgeführt ist. Diese besonders stabile Befestigung der Lenkradskelettabdeckung 10 am Lenkradskelett 12 ist gemäß den Figuren 2 und 5 im Bereich der Montagevorsprünge 24 vorgesehen, welche in einer Grundstellung des Fahrzeuglenkrads 14 für Geradeausfahrt in axialer Draufsicht vorzugsweise ungefähr in einer 9-Uhr-Position und einer 3-Uhr-Position angeordnet sind. Das Lenkradskelett 12 weist im Bereich jedes Montagevorsprungs 24 einen Skelettvorsprung 50 auf, in dem ebenfalls Befestigungsöffnungen vorgesehen sind, sodass sich im vorliegenden Ausführungsbeispiel die Lenkradskelettabdeckung 10 über Schrauben 52 fest mit dem Lenkradskelett 12 verbinden lässt.

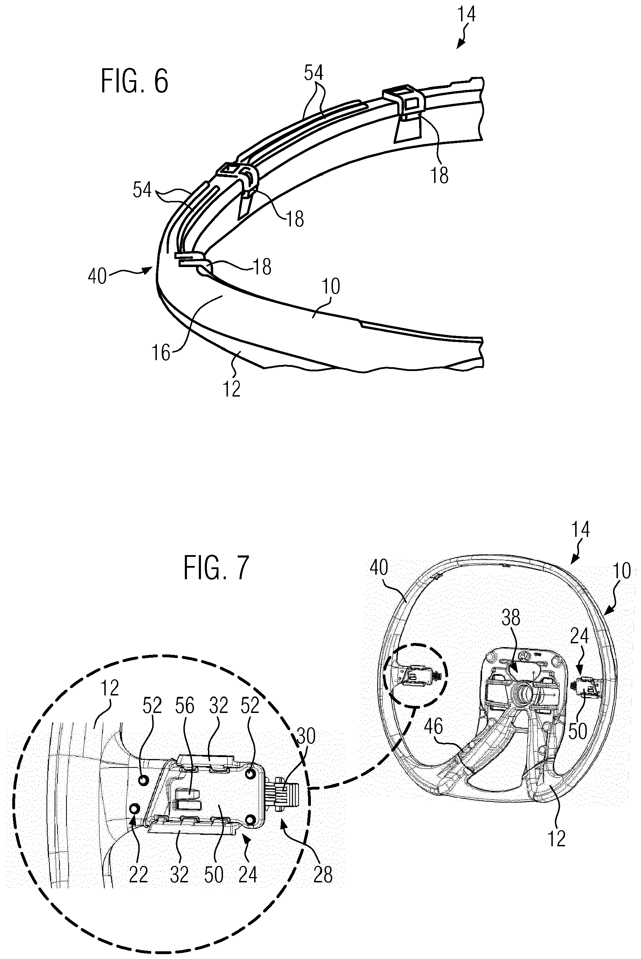

Die Figur 6 zeigt einen Abschnitt der am Lenkradskelett 12 befestigten Lenkradskelettabdeckung 10, wobei der Abdeckabschnitt 16 auf einer vom Lenkradskelett 12 abgewandten Außenseite eine strukturierte Oberfläche aufweist, die insbesondere nach außen abstehende Rippen 54 umfasst (siehe auch Figur 9). Die Rippen 54 erstrecken sich insbesondere in Umfangsrichtung 42, das heißt in Längsrichtung des Lenkradkranzes 40. Ferner befinden sich die Rippen 54 mit Bezug auf den eingebauten Zustand des Fahrzeuglenkrads 14 auf einer Rückseite, das heißt auf einer vom Fahrer abgewandten Seite des Fahrzeuglenkrads 14.

Die strukturierte Oberfläche auf der Außenseite der am Lenkradskelett 12 befestigten Lenkradskelettabdeckung 10 ist in einer Grundstellung des Fahrzeuglenkrads 14 für Geradeausfahrt in axialer Draufsicht vorzugsweise in einem oberen Abschnitt zwischen einer 9-Uhr-Position und einer 3-Uhr-Position vorgesehen. Alternativ oder zusätzlich kann jedoch auch in anderen Bereichen der Lenkradskelettabdeckung 10 solch eine strukturierte Oberfläche in Form von abstehenden Rippen 54 oder ähnlichem vorgesehen.

Die Figur 7 zeigt eine Vorderansicht des Fahrzeuglenkrads 14 aus Figur 2 und verdeutlicht nochmals die Befestigung zwischen der Lenkradskelettabdeckung 10 und dem Lenkradskelett 12 im Bereich eines Montage- und Skelettvorsprungs 24, 50. Neben der Verschraubung mittels Schrauben 52 umgreift der Montagevorsprung 24 gemäß dem Detailausschnitt der Figur 7 den Skelettvorsprung 50 mittels Rastfortsätzen, sodass sich eine Rastverbindung ergibt. Im vorliegenden Ausführungsbeispiel sind konkret die Führungen 32 für die elektrische Bedieneinheit 26 als Rastfortsätze ausgebildet.

Ferner ist am Skelettvorsprung 50 eine Rastnase 56 zur Rastbefestigung der elektrischen Bedieneinheit 26 vorgesehen. Eine solche Rastnase 56 kann alternativ oder zusätzlich auch am Montagevorsprung 24 der Lenkradskelettabdeckung 10 vorgesehen sein.

Genau wie die Figur 2 zeigt die Figur 8 eine Rückansicht des Lenkrads 14, wobei eine Umschäumung 58 aufgebracht ist, die zumindest abschnittsweise das Lenkradskelett 12 und die Lenkradskelettabdeckung 10 umgibt.

Die Figur 9 zeigt einen Querschnitt IX-IX durch das Lenkrad 14 gemäß Figur 8 und verdeutlicht, dass die Umschäumung 58 das Lenkradskelett 12 und die Lenkradskelettabdeckung 10 im Querschnitt vollständig umschließt.

Im Übrigen sind in Figur 9 auch die Rippen 54 der strukturierten Oberfläche der Lenkradskelettabdeckung 10. Die Rippen 54 sorgen für einen besseren Verbund der Lenkradskelettabdeckung 10 bzw. des Lenkradskeletts 12 mit der Umschäumung 58 und bilden eine Verdrehsicherung bei einer Drehbeanspruchung 60 der Umschäumung 58 um die Längsrichtung des Lenkradkranzes 40.

Gemäß Figur 9 weist die Lenkradskelettabdeckung 10 zumindest abschnittsweise einen L-förmigen Querschnitt auf, der zusammen mit dem offenen, beispielsweise L- oder U-förmigen Querschnitt des Lenkradskeletts 12 ein im Querschnitt geschlossenes Hohlprofil bildet. Auf diese Weise entsteht im Inneren des Lenkrads 14 ein Hohlraum 62, der beim Umschäumen nicht durch Schäummaterial gefüllt wird. Folglich wird weniger Schäummaterial benötigt, sodass sich das Gewicht des Lenkrads 14 in vorteilhafter Weise verringert. Zudem kann die elektrische Leitung 34 zumindest abschnittsweise in dem Hohlraum 62 aufgenommen werden. Eine Beschädigung der elektrischen Leitung 34 ist dabei aufgrund ihrer geschützten Lage weitgehend ausgeschlossen. Ferner ist keine nachträgliche, aufwendige Bearbeitung der Umschäumung zum Verlegen und Befestigen der elektrischen Leitung notwendig.

Wie in Figur 9 angedeutet, können zwischen den Schenkeln des L-förmigen Querschnitts der Lenkradskelettabdeckung 10 in Längsrichtung des Lenkradkranzes 40 beabstandete Versteifungsrippen 64 vorgesehen sein, um die Stabilität der Lenkradskelettabdeckung 10 zu erhöhen.

Im Folgenden wird anhand der Figur 10 ein Verfahren zum Herstellen des Fahrzeuglenkrads 14 beschrieben.

Bei diesem Herstellungsverfahren wird zunächst das Lenkradskelett 12 und die Lenkradskelettabdeckung 10 bereitgestellt, wobei das Lenkradskelett 12 bevorzugt als Spritzgussteil aus einer Magnesiumlegierung oder Aluminiumlegierung hergestellt ist.

Im nächsten Verfahrensschritt wird die elektrische Leitung 34 an der Lenkradskelettabdeckung 10 und dann die Lenkradskelettabdeckung 10 mitsamt der Leitung 34 so am Lenkradskelett 12 befestigt, dass sich die elektrische Leitung 34 zumindest bereichsweise zwischen der Lenkradskelettabdeckung 10 und dem Lenkradskelett 12 befindet. Auf diese Weise entsteht eine vormontierte Skelettbaugruppe 66, welche das Lenkradskelett 12, die Lenkradskelettabdeckung 10 und die elektrische Leitung 34 umfasst.

Diese vormontierte Skelettbaugruppe 66 wird in einem weiteren Verfahrensschritt umschäumt, beispielsweise durch ein Schäummaterial aus Polyurethan.

Nach dem Umschäumen der Skelettbaugruppe 66 wird optional zumindest abschnittsweise eine Verkleidung 68, insbesondere eine Leder- oder Holzverkleidung auf die Umschäumung 58 aufgebracht.

Ferner kann nach dem Umschäumen eine elektrische Bedieneinheit 26 bereitgestellt und auf den Montagevorsprung 24 aufgesteckt werden. Beim Aufstecken auf den Montagevorsprung 24 wird die Bedieneinheit 26 über den Steckverbinder 30 elektrisch angeschlossen und darüber hinaus am Montagevorsprung 24 und/oder am Skelettvorsprung 50 befestigt, insbesondere verrastet.

Die Bedieneinheit 26 ist beispielsweise eine unter Umständen beleuchtete Multifunktionsschalterbaugruppe und wird vorzugsweise nach dem Aufbringen der Verkleidung 68 auf den Montagevorsprung 24 aufgesteckt. Idealerweise ist die Bedieneinheit 26 somit bei einem Defekt oder einer gewünschten Funktions-änderung jederzeit mit geringem Aufwand austauschbar.

## Patentansprüche

1. Lenkradskelettabdeckung zur Montage an einem Lenkradskelett (12) eines Fahrzeuglenkrads (14), mit
einem Abdeckabschnitt (16) zum Schließen eines im Querschnitt offenen Profils des Lenkradskeletts (12), sowie
wenigstens einem Befestigungselement (18, 20, 22) zum Fixieren der Lenkradskelettabdeckung (10) am Lenkradskelett (12), **dadurch gekennzeichnet,**
**dass** ein einstückig angeformter Steckverbinder (30) zur elektrischen Verbindung mit einer elektrischen Bedieneinheit (26) des Fahrzeuglenkrads (14) vorgesehen ist, und/oder
**dass** der Abdeckabschnitt (16) skelettseitig Vorsprünge (36) zur Führung und/oder Befestigung einer elektrischen Leitung (34) aufweist.

2. Lenkradskelettabdeckung nach Anspruch 1, **dadurch gekennzeichnet, dass** die Vorsprünge (36) als elastische Clips zum Einclipsen der elektrischen Leitung (34) ausgeführt sind.

3. Lenkradskelettabdeckung nach wenigstens einem der vorhergehenden Ansprüche, **dadurch gekennzeichnet, dass** der Abdeckabschnitt (16) auf einer vom Lenkradskelett (12) abgewandten Seite eine strukturierte Oberfläche aufweist, die insbesondere abstehende Rippen (54) umfasst.

4. Lenkradskelettabdeckung nach wenigstens einem der vorhergehenden Ansprüche, **dadurch gekennzeichnet, dass** der Abdeckabschnitt (16) einen Montagevorsprung (24) zum Aufstecken einer elektrischen Bedieneinheit (26) des Fahrzeuglenkrads (14) aufweist.

5. Lenkradskelettabdeckung nach wenigstens einem der vorhergehenden Ansprüche, **dadurch gekennzeichnet, dass** das wenigstens eine Befestigungselement (18, 20, 22) ein Rastelement zum Verrasten mit dem Lenkradskelett (12) und/oder einen Reibschlussabschnitt zur reibschlüssigen Verbindung mit dem Lenkradskelett (12) und/oder eine Befestigungsöffnung zum Verschrauben oder Vernieten mit dem Lenkradskelett (12) umfasst.

6. Lenkradskelettabdeckung nach wenigstens einem der vorhergehenden Ansprüche, **dadurch gekennzeichnet, dass** die Lenkradskelettabdeckung (10) zumindest abschnittsweise einen L-förmigen Querschnitt aufweist.

7. Lenkrad für ein Fahrzeug, mit
einer Lenkradachse (A),
einer Nabe (38) zur Befestigung des Lenkrads (14) an einer um die Lenkradachse (A) drehbaren Lenkwelle,
einem Lenkradkranz (40), der mit der Nabe (38) verbunden ist und die Nabe (38) in Umfangsrichtung (42) zumindest teilweise umgibt,
einem Lenkradskelett (12), und
einer Lenkradskelettabdeckung (10) nach wenigstens einem der vorhergehenden Ansprüche,
**dadurch gekennzeichnet, dass** das Lenkradskelett (12) zusammen mit der Lenkradskelettabdeckung (10) zumindest abschnittsweise ein im Querschnitt geschlossenes Hohlprofil ausbildet.

8. Lenkrad nach Anspruch 7, **dadurch gekennzeichnet, dass** die Lenkradskelettabdeckung (10) in axialer Draufsicht C-förmig ausgebildet ist und das Lenkradskelett (12) im Bereich des Lenkradkranzes (40) abdeckt.

9. Lenkrad nach Anspruch 7 oder 8, **dadurch gekennzeichnet, dass** eine Umschäumung (58) vorgesehen ist, die zumindest abschnittsweise das Lenkradskelett (12) und die Lenkradskelettabdeckung (10) umgibt.

10. Verfahren zum Herstellen eines Fahrzeuglenkrads mit folgenden Schritten:
- Bereitstellen eines Lenkradskeletts (12) und einer Lenkradskelettabdeckung (10) nach einem der Ansprüche 1 bis 6;
- Befestigen einer elektrischen Leitung (34) an der Lenkradskelettabdeckung (10);
- Befestigen der Lenkradskelettabdeckung (10) am Lenkradskelett (12), sodass sich die elektrische Leitung (34) zumindest bereichsweise zwischen der Lenkradskelettabdeckung (10) und dem Lenkradskelett (12) befindet und eine vormontierte Skelettbaugruppe (66) entsteht;
- Umschäumen der vormontierten Skelettbaugruppe (66).

11. Verfahren nach Anspruch 10, **dadurch gekennzeichnet, dass** nach dem Umschäumen eine elektrische Bedieneinheit (26) bereitgestellt und auf einen Montagevorsprung (24) aufgesteckt wird.

12. Verfahren nach Anspruch 10 oder 11, **dadurch gekennzeichnet, dass** nach dem Umschäumen zumindest abschnittsweise eine Verkleidung (68), insbesondere eine Leder- oder Holzverkleidung auf die Umschäumung (58) aufgebracht wird.

## Claims

1. A steering wheel armature cover for mounting to a steering wheel armature (12) of a vehicle steering wheel (14), comprising
a cover portion (16) for closing a profile of the steering wheel armature (12) open in cross-section, and
at least one securing element (18, 20, 22) for fixing the steering wheel armature cover (10) to the steering wheel armature (12), **characterized in that**
an integrally formed plug connector (30) is provided for electrical connection to an electrical operating unit (26) of the vehicle steering wheel (14) and/or
the cover portion (16) includes projections (36) on the armature side for guiding and/or securing an electric line (34).

2. The steering wheel armature cover according to claim 1, **characterized in that** the projections (36) are in the form of elastic clips for clip-connecting the electric line (34).

3. The steering wheel armature cover according to at least one of the preceding claims, **characterized in that** the cover portion (16) has a structured surface especially comprising protruding ribs (54) on a side facing away from the steering wheel armature (12).

4. The steering wheel armature cover according to at least one of the preceding claims, **characterized in that** the cover portion (16) has a mounting projection (24) for attaching an electrical operating unit (26) of the vehicle steering wheel (14).

5. The steering wheel armature cover according to at least one of the preceding claims, **characterized in that** the at least one securing element (18, 20, 22) comprises a detent element for latching to the steering wheel armature (12) and or a friction-locking portion for frictional connection to the steering wheel armature (12) and/or a securing opening for screwing or riveting to the steering wheel armature (12).

6. The steering wheel armature cover according to at least one of the preceding claims, **characterized in that** the steering wheel armature cover (10) at least in portions has an L-shaped cross-section.

7. A steering wheel for a vehicle comprising
a steering wheel axis (A),
a hub (38) for securing the steering wheel (14) to a steering shaft rotatable about the steering wheel axis (A),
a steering wheel rim (40) which is connected to the hub (38) and at least partially surrounds the hub (38) in the circumferential direction (42),
a steering wheel armature (12) and
a steering wheel armature cover (10) according to at least one of the preceding claims,
**characterized in that** the steering wheel armature (12) forms a hollow section closed in cross-section at least in portion together with the steering wheel armature cover (10).

8. The steering wheel according to claim 7, **characterized in that** the steering wheel armature cover (10) in the axial top view is C-shaped and covers the steering wheel armature (12) in the area of the steering wheel rim (40).

9. The steering wheel according to claim 7 or 8, **characterized in that** a foam-coating (58) is provided which at least in portions surrounds the steering wheel armature (12) and the steering wheel armature cover (10).

10. A method of manufacturing a vehicle steering wheel comprising the following steps of:
- providing a steering wheel armature (12) and a steering wheel armature cover (10) according to any one of the claims 1 to 6;
- securing an electric line (34) to the steering wheel armature cover (10);
- securing the steering wheel armature cover (10) to the steering wheel armature (12) so that the electric line (34) at least in portions is located between the steering wheel armature cover (10) and the steering wheel armature (12) and a pre-assembled armature subassembly (66) is formed;
- foam-coating a pre-assembled armature subassembly (66).

11. The method according to claim 10, **characterized in that** after foam-coating an electrical operating unit (26) is provided and is attached to a mounting projection (24).

12. The method according to claim 10 or 11, **characterized in that** after the foam-coating at least in portions a lining (68), especially leather or wooden lining, is applied to the foam-coating (58).

## Revendications

1. Habillage d'armature de volant pour le montage sur une armature de volant (12) d'un volant de véhicule (14), avec
une zone de recouvrement (16) pour fermer un profil d'armature de volant (12) ouvert en section transversale, et
au moins un élément de fixation (18, 20, 22) pour fixer l'habillage d'armature de volant (10) à l'armature de volant (12), **caractérisé en ce que**
un connecteur (30) formé d'un seul tenant est prévu pour la connexion électrique à une unité de commande électrique (26) du volant de direction du véhicule (14), et/ou
**en ce que** la zone de recouvrement (16) présente des protrusions (36) du côté de l'armature pour guider et/ou fixer un câble électrique (34).

2. Habillage d'armature de volant selon la revendication 1, **caractérisé en ce que** les protrusions (36) sont conçues comme des clips élastiques pour encliqueter le câble électrique (34).

3. Habillage d'armature de volant selon l'une au moins des revendications précédentes, **caractérisé en ce que** la zone de recouvrement (16) présente, sur un côté opposé à l'armature du volant (12), une surface texturée, qui comprend notamment des nervures saillantes (54).

4. Habillage d'armature de volant selon au moins l'une des revendications précédentes, **caractérisé en ce que** la zone de recouvrement (16) comprend une protrusion de montage (24) pour le montage d'une unité de commande électrique (26) du volant de véhicule (14).

5. Habillage d'armature de volant selon au moins l'une des revendications précédentes, **caractérisé en ce que** l'au moins un élément de fixation (18, 20, 22) comprend un élément d'encliquetage pour l'encliquetage sur l'armature de volant (12) et/ou une zone de liaison par frottement pour la liaison par frottement sur l'armature de volant (12) et/ou une ouverture de fixation pour le vissage ou le rivetage sur l'armature du volant (12).

6. Habillage de l'armature du volant selon au moins une des revendications précédentes, **caractérisé en ce que** l'habillage de l'armature du volant (10) présente, au moins en partie, une section transversale en forme de L.

7. Volant de direction pour un véhicule, comprenant
un axe de roue directrice (A),
un moyeu (38) pour monter le volant (14) sur un arbre de direction pouvant tourner autour de l'axe du volant (A),
une jante de volant (40) qui est reliée au moyeu (38) et entoure au moins partiellement le moyeu (38) dans la direction circonférentielle (42)
une armature de volant (12), et
un habillage d'armature de volant (10) selon au moins l'une des revendications précédentes,
**caractérisé en ce que** l'armature de volant (12) forme avec l'habillage de l'armature du volant (10), au moins par sections, un profilé creux fermé en section transversale.

8. Volant selon la revendication 7, **caractérisé en ce que** l'habillage de l'armature du volant (10) est en forme de C en vue de dessus axiale et recouvre l'armature du volant (12) dans la zone de la jante du volant (40).

9. Volant selon la revendication 7 ou 8, **caractérisé en ce qu'**il est prévu un revêtement en mousse (58) qui entoure au moins par sections l'armature du volant (12) et l'habillage de l'armature du volant (10).

10. Procédé de fabrication d'un volant de direction de véhicule comprenant les étapes suivantes :
- - Fournir une armature de volant (12) et un habillage d'armature de volant (10) selon l'une quelconque des revendications 1 à 6 ;
- - Fixer un câble électrique (34) sur l'habillage de l'armature du volant (10) ;
- - fixer l'habillage de l'armature du volant (10) à l'armature du volant (12) de sorte que le câble électrique (34) soit situé au moins en partie entre l'habillage de l'armature du volant (10) et l'armature de volant (12) pour former un ensemble d'armature préassemblé (66) ;
- - revêtement à l'aide d'une mousse de l'ensemble armature préassemblé (66).

11. Procédé selon la revendication 10, **caractérisé en ce qu'**une unité de commande électrique (26) est prévue après le revêtement à l'aide d'une mousse et est enfichée sur une protrusion de montage (24).

12. Procédé selon la revendication 10 ou 11, **caractérisé en ce que**, après le revêtement à l'aide d'une mousse, un habillage (68), en particulier un habillage en cuir ou en bois, est appliqué au moins par sections sur le revêtement en mousse (58).
